# EUROPEAN PATENT APPLICATION

(11) **EP 2 391 053 A1**
(43) Date of publication of application: **30.11.2011**
(21) Application number: 09838687.3
(22) Date of filing: 23.01.2009
(51) Int. Cl.: H04L 9/32

(54) **SECURE ACCESS CONTROL SYSTEM**

(71) Applicant: Vanios Consulting, S.l., 28037 Madrid (ES)
(72) Inventor: URIOS RODRÍGUEZ, Jorge, E-28037 Madrid (ES); MORENO HERVÁS, Iván, E-28037 Madrid (ES)
(74) Representative: Carvajal y Urquijo, Isabel
(86) International application number: PCT/ES2009/000034
(87) International publication number: WO 2010/084209

(57) **Abstract**

Secure access control system in banking or similar operations comprising, at least a server (1) or *host* element in communication with a banking environment (5), a biometric device (2), a client element (3) and the communication elements (4) between the server element (1) and the client element (3), said elements being configured in such a way that an "*applet*" component built into the server element (1) initiates the control process (41) requesting the authentication (42) of the biometric device (2), performing the authentication by means of a certificate of the biometric device; the latter requests the biometric data (43), said data being verified by comparison with the biometric data recorded in a prior process and generating a password (OTP) which is sent to the server element (1) for validation, the banking environment (5) being informed thereof and responding with the user customized environment (49) if the authentication is positive, said environment being displayed in the client element (3).

## Description

The object of the secure access control system and method is to provide a secure environment for operations requiring it, particularly banking operations performed through WLAN networks. The center of the system is a USB type external device basically provided with a processor, a memory, a cryptographic chip and biometric reading means configured as main element for the protection of the operations to be performed.

### BACKGROUND OF THE INVENTION

It is unknown by inventors, experts in the art, a secure access control system as the one described in the present invention patent.

### DESCRIPTION OF THE INVENTION

The secure access control system in banking or similar operations comprises, at least, a server element or *host* configured to contain all the functionality of the solution in communication with a banking environment, a biometric device, a client element and the communication elements between the server element and the client element, said elements being configured, basically, in such a way that:
an "*applet*" component built into the server element initiates the control process requesting the authentication of the biometric device, performing the authentication by means of a certificate of the biometric device; once the biometric device (2) has been validated, it requests the biometric data from the user, said data being verified by comparison with the biometric data recorded in the prior process and if the result is positive, a password (OTP) is generated which is sent to the server element (1) to be validated, valid for only one access, the banking environment being informed and responding with the user customized environment if the authentication is positive, said environment being displayed in the client element, the client environment being in the background with respect to the banking environment which is the one that keeps the control over the state of the session.

The authentication of the device in the host environment is performed by means of a certificate of the biometric device. At the moment of the device logging in the system, the server records the public key of the certificate server of each device and it is compared in each access operation with the public key of the certificate sent in this communication by the device, so as to later perform a signature operation which guarantees the integrity of the device within the system. Once the device in the server has been validated, the device, by means of the applet.

The system also comprises a database including all the information associated to each biometric device; said information comprising, at least, a common field which identifies the user in a unique manner in the server and banking environments.

The information is in the form of tables, at least one of users, one of devices and one of the application versions.

The system is configured to sign processes digitally, and wherein a *plugin* element built into the user environment starts the signature process, after verifying the positioning of the fingerprint or biometric data again, against the bank traditional server, it makes a signature request to the user through the applet element and the biometric device, wherein said data are verified as well as the document signature; and wherein once the document is deemed signed, the signature is sent to the sever element, where it is stored, and an answer, redirection and result are given to the traditional bank server.

Besides performing the signature process through the digital signature, the device can offer other forms to guarantee the user identity and the integrity of the processes in this operation environment with the banking environment. These alternatives can be:
- Generating a temporary password through a key generating function.
- Having inserted a key prior to these operations, the system can compare a server key with the one inserted in the device, this comparison can be total, partial, random, etc.
- Verifying the device certificate keys, that is, without making the signatures.

All of that is carried out after the user puts his/her fingerprint on, and its comparison with the base, or the base fingerprint, is correct.

The biometric device comprises, at least:
a digital fingerprint reader and a cryptographic element configured to understand the security elements fundamental to the access to banking environments, such as the user personal data including his/her fingerprint and digital certificate; and
a processor and memory configured to execute a Unix/Linux/Windows type operating system, where this operating system is in charge of communicating and managing different components of the device, as well as the access and modification of personal data stored in the memory, and the communication with the client element. The biometric device is a USB type external component which communicates with the client element using the USB over IP protocol, so that the packets exchange is carried out by means of TCP defining a closed message and data format.

The communications between the client element and the server element is carried out by means of the HTTPS protocol, end-to-end encrypted, the server element and the biometric element connected to the client element being the ones in charge of cryptographic functions.

Throughout the description and claims the word "comprise" and its variants do not intend to exclude other technical characteristics, additions, components or steps. For experts in the art, other objects, advantages and characteristics of the invention will be derived partly from the description and partly from the practice of the invention. The following examples and drawings are provided only as illustration and they are not intended to be limiting of the present invention. Also, the present invention covers all possible combinations of particular and preferred embodiments indicated herein.

### BRIEF DESCRIPTION OF THE DRAWINGS

FIG. 1 shows the general architecture of the system object of the present invention.
FIG. 2 shows a series of tables to identify the users and which are limited to the server environment (host).
FIG. 3 shows the communication architecture between the different elements forming the system object of the invention.
FIG. 4 shows the request sending scheme between the different parts involved in the user identification.
FIG. 5 shows the request sending scheme between the different parts involved in the verification of the digital signature of a document.

### PREFERRED EMBODIMENT OF THE INVENTION

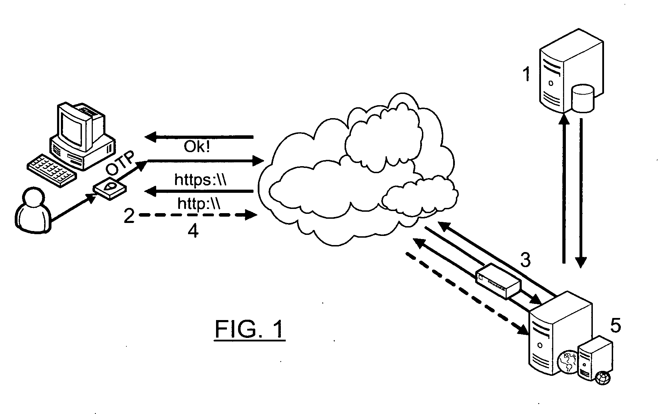

As shown in figure 1 the secure access control system comprises four main elements, the server element 1 (host, that is, the servers of the bank which implements the system object of the invention), the biometric device 2, preferably a fingerprint reading device, the client element 3 (the bank client) and the communications 4 between said elements. Each one of these elements must be adapted to the architecture specifications of the bank 5 to attain an integration with its system which is as little intrusive as possible.

More specifically, the server element 1 contains all the functionality of the solution which the bank 5 will have installed on its servers. All the information related to each client of the bank is included here, such as, for example, the balance, products s/he has signed up for or the access password to the environment.

For the integration of the system of the invention, a previous analysis of the processes performed by the Web environment of the bank 5 is carried out, but, in general, the solution requires an integrated database or one independent from the client's, which includes some tables where the information associated to each biometric device 2 will be stored, such as for example, each device identifier, the one-time password (OTP), update versions, etc. All functions necessary for the encryption and password generation processes will be included in the server environment 1 (host).

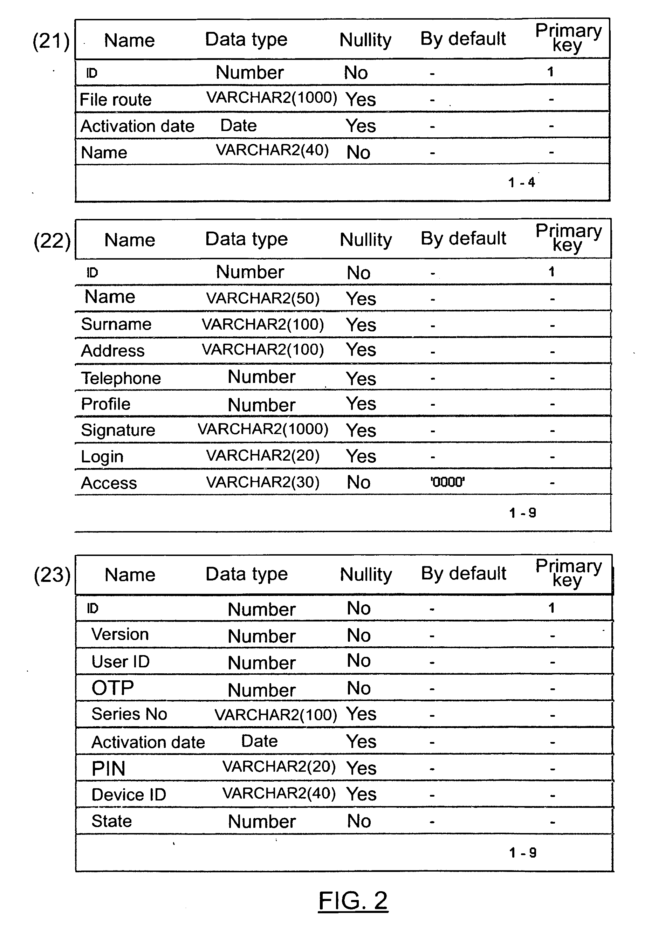

At this point, there can be variations in the architecture depending on the database design the bank 5 desires. The options include a single system with several steps, including everything in one database or using two completely independent databases connected by a Web type process, sockets, RMI or transactions. The only essential thing is to have a common field which identifies a user in both environments. The basic structure of the tables used is shown in figure 2, where a user table 21, with different personal data, a table of devices 22 with their data, and a table of versions 23 with their own data are included.

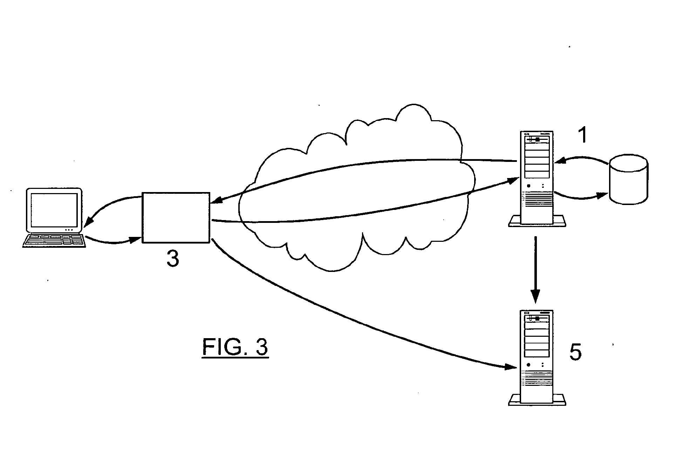

The communication environment 4 between the different elements is shown in figure 3 where it can be seen how, once the server element 1 has identified the user as an authenticated client of the bank, the access is reflected and the traditional bank environment 5 is informed thereof. Then the user is redirected to his/her personal environment and the application of the invention will be a background application until the digital signature of a process or document is requested.

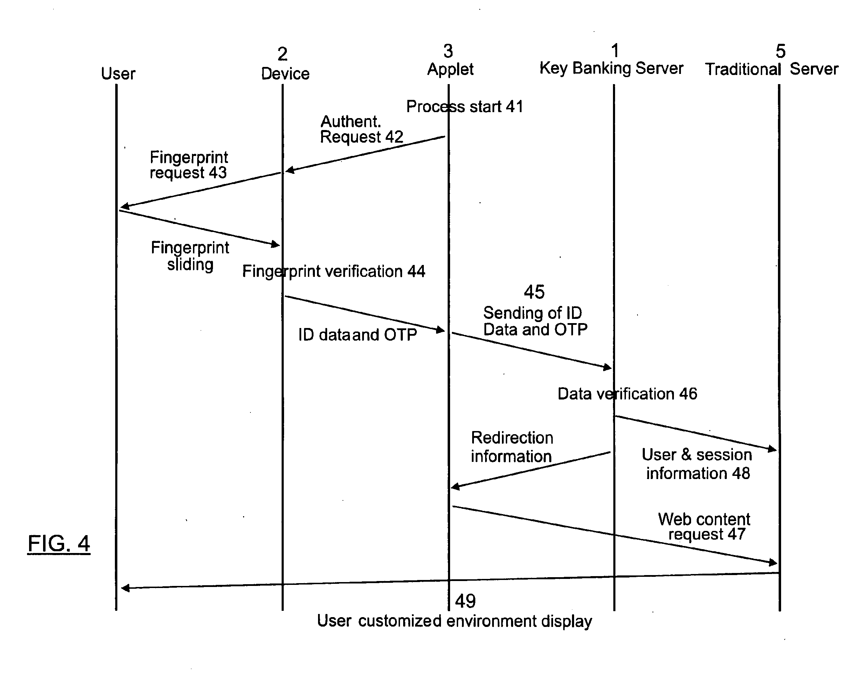

The manner of indicating the original Web server that the user has successfully *logged in* or gained valid access has several possibilities, ranging from *Web Services* to Web redirection. In any of the cases, the bank server 5 must be informed that the user has gained access to the system, which implies that the server must know some of the data required by the bank Web server 5 and which must be a part of the common data between both databases. Figure 4 shows the flow of data between the parts involved in the access.

First, the *Applet* starts the process 41 requesting the authentication 42 of the biometric device, which in turn indicates the user the fingerprint request 43, once this is done by the user, the fingerprint 44 is verified and the identification data and OTP 45 are transmitted through the *Applet.* The accuracy of the data 46 will be verified in the server and the traditional server will be informed that, through two different ways (redirection information and web content request 47 or user and session information 48), the customized environment will be displayed to the user 49.

At this point, the traditional web server is the one that keeps control over the state of the session and of the environment, but the client application is loaded in the browser memory waiting to have to perform another action.

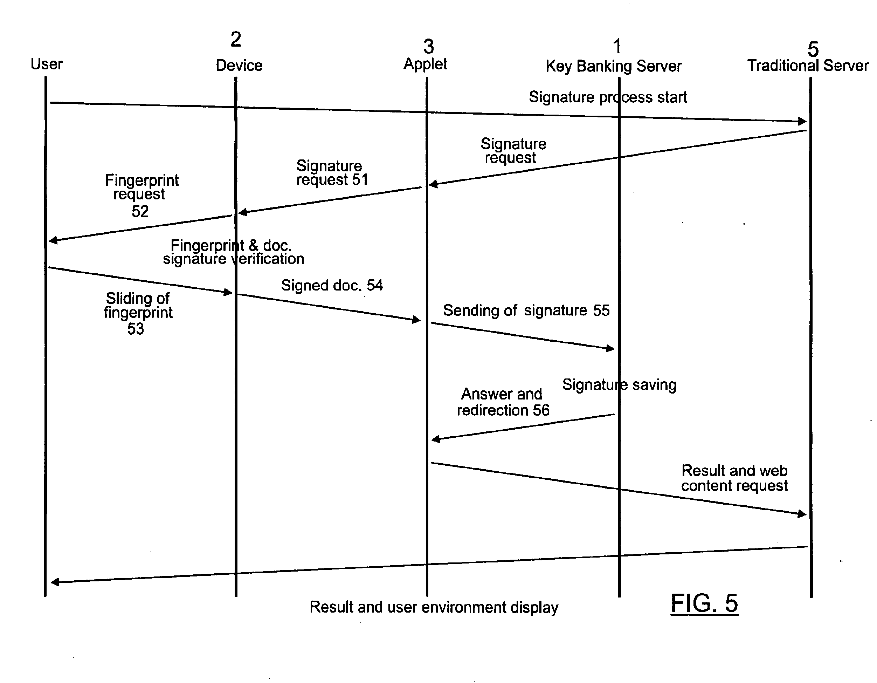

For the digital signature process, it is the environment which requests the *plugin* of the application to start the process, and must provide the document or data which are to be signed. Then the *plugin* will start the necessary communications with all the elements of the system, including the digital fingerprint request to the user and the storing of the signed document in the server 1 (*host*). The timing and communication scheme is shown in detail in figure 5.

In said figure 5 it can be seen how the user *plugin* starts the signature process 51 against the bank traditional server, which makes the signature request 52 to the user through the *Applet* and the biometric data reading device, where once again the fingerprint and signature of the document 53 are verified, and once the signed document 54 has been considered, the signature 55 is sent to the server, where it is stored 55, and an answer, redirection and result 56 are given against the traditional bank server

The updates in the server environment 1 (*host*) will be performed by an executable on the server, where this executable will automatically update the critical processes and modify all the necessary data so as not to compromise the normal operation of the solution.

The biometric device 2, as shown in figure 6, is an external component of the USB type, as well as being the basic element of the application, since it is where the essential safety elements are located for a scenario of access to banking environments, such as the user personal data including the fingerprint and its digital certificate. All these data are stored in a secure and inaccessible manner for unauthorized personnel and comply with all security standards.

This device 2 includes a cryptographic element where the user information is stored in a safe and inaccessible manner, as well as the fingerprint sample.

Another of its elements is a fingerprint reader, which will be used to obtain a representation of the user fingerprint. These readings will serve to store the necessary information for the authentication in the cryptographic chip. A processor and enough memory are also included to execute a Unix-type operating system, where this operating system is in charge of communicating and managing different components of the device, as well as the access and modification of personal data stored in the memory, and the communication through USB with the equipment in which the device is connected.

For the implementation of the necessary functionalities, exclusive software has been developed, structured in a series of dynamic libraries loaded in the system which are called from a main program. The functions of these libraries go from the control of the drivers of the hardware elements to the implementation of the different encryptions and accesses to critical data. This structure has been chosen to facilitate the system updating process.

The communication of the biometric device 2 with the client element 3 through the USB port is performed using the IP protocol on USB, so that the packets exchange is carried out by means of TCP. This has enabled to define a closed message and data format.

All operations always start at the request of the server element 1, so the device software 2 only receives requests, interacts with the user if necessary and responds with the appropriate data. The software has been provided with the possibility of remote updating, so that it is possible to improve it or solve problems or errors even if it is already deployed or being used by the end user.

Finally, it is worth highlighting that the hardware has the feature that if it is opened in order to inspect the interior components or to try to access the data through illegal means, the immediate invalidation of the operations of the elements comprising it will occur.

The client element or client environment refers to the interface of the system object of the invention with the end user or client of the bank, accessible through a WLAN, preferably Internet. Particularly, they are a series of *plugins* which allow communication with the biometric data reading device in a secure manner and with no need for specific software installation in the user PC.

Due to the system design, it will be possible to use any type of machine which includes a USB port and a Web browser, without any other restriction (home PCs, POS terminal, PDAs or any others that the bank wants to make available are valid).

Since the *plugin* has to be compatible with the greatest possible number of operating systems of the client, and since it must be accessible through the Web, and it must be possible to establish communication with the USB port, a Java implementation has been chosen in the form of an *Applet* embedded in a Web page and signed by an authorized certification entity. The *plugin* must be signed by a trusted certification entity so that it has permission in the bank server.

Another embodiment example could be an *ActiveX* component for Internet Explorer and different *plugin* owners for each one of the major existing browsers. However, this would cause the existence of different implementations of the same application, so that their management, maintenance and later modification would be much more complex.

The communication with the device is performed through the TCP/IP protocol on USB which allows to use a well-known standard protocol and which adapts to the needs of the solution, as well as being included in most operating systems so it is not necessary to carry out any installation or configuration in the equipment.

The communication protocol used is based on the exchange of predefined and encrypted messages according to the parameters only known by the *plugin* and the biometric device. These messages vary with time although they always have the same format, so they are illegible for an observer who is not allowed.

The communication between client (3) and server (1) is performed through the HTTPS protocol. This communication is end-to-end encrypted. That is, the *plugin* will never make encryption or decryption tasks, but instead, it only sends data from the device to the server and vice versa, so that both of them are in charge of the cryptographic functions.

As it has been indicated, before the normal operation of the device it is necessary to make some associations and records from the banking environment. Specifically, the device must be associated to the end user and a user certificate must be inserted in their device. This certificate will later be the one which enables to sign processes and documents in an unequivocal and legal manner. Also, the user him/herself will be the one who, when recording his/her fingerprints in the biometric device at his/her first use, allows the validation of said fingerprint when it is so required.

The communication environment 4 encompasses all that is needed to attain the communication between the client environment and the biometric device so that the user can perform all operations in a safe and transparent manner. As it has already been indicated, the communications are performed through TCP/IP, TCP/IP on USB and through HTTPS and SSL protocols.

The data transmitted during the communications, in certain occasions, can contain confidential information, which a malicious user could try to use to acquire enough information to perform unauthorized actions. Despite the fact that in order to generate this information the end user fingerprint displacement and, therefore, their consent, is always required, it is necessary to encrypt all communications in some way so that only the authorized elements can be understood. The system elements which should have access to this information are the biometric device and the server element.

By contrast, the application does not need to decrypt or encrypt any information as it only transfers it from one end to the other, these ends being the ones in charge of performing cryptographic tasks. Also, in this way it is possible to protect the encryption algorithm, as no task is performed in the client own machine.

All the exchanged data are encrypted after the exchange of a pair of messages between the device and the application. A 3DES algorithm is used, with a variable seed both in session and with each one of the possible software updates. Thus, it is possible to change the encryption in each one of the updates to avoid or suppress some types of attacks. Also, in each session the encrypted data will be different.

It is provided an additional safety layer to the communications by providing the system with SSL type communications. That is, the server element works on the HTTPS, which is why all the data which are sent to the server are encrypted with the public key of the server certificate, guaranteeing that no observer with access to the messages travelling through the network can understand them.

Similarly, the same device is an SSL server with a device certificate, and all the data which are sent to it are encrypted with their public key, this device being the only one capable of decrypting them. It is possible to change the device certificate according to the number of uses to guarantee the integrity thereof.

Once the confidentiality of communications has been secured, it is also necessary to secure the user identification so that it is impossible to falsify. This is attained thanks to the generation of a *One Time Password* (OTP), which will be recognized by the server as valid and which will change from session to session. The generation of this OTP is also based on a sequential algorithm with several input parameters. Said parameters, as well as the algorithm, can be changed from version to version, so that it is possible to secure the system again in case the algorithm is broken. These data must be shared between the device and the server, and it must be possible to verify if an OTP is valid for the current time, and detect the misuse of an OTP to be able to inform the user or the banking environment.

Finally, there is also the possibility of making digital signatures of processes and documents with the user certificate stored in the biometric device. This certificate is stored when the device is recorded in the server, and is signed by a trusted certification authority (CA) of the server element.

Thus, when the banking environment requests the signature to the device, it will provide the document it has requested to sign, and the device will provide the signature and the user public certificate signed by the trusted CA. This certificate and the same signature will be verified by the server, and if it is a positive match, the user digital signature will be validated and stored as valid.

The great advantage of the system consists of the control over all the parties involved, thus being possible to provide it with all the safety necessary for specific cases. Also, the intervention of the client computer or its operating system is not necessary, so the problem of the presence of malware locally installed is prevented.

All communications are double encrypted and also, if the communications or algorithms are compromised, it is possible to change them in a remote manner through the deployment of a new version of the software.

In this architecture, there are multi-parties involved and distributed in different machines, as it is not a completely centralized solution to which end users have access, as in the case of full web applications. The elements residing in the server, although they may not be immediately accessible for their maintenance, are centralized in a physical place, so they can be updated easily and they can be error-free. Also, since they predictably reside in an intranet, the problem of protecting them from external attacks is a common problem, and for such problem there exist several solutions which have been already proven and put into practice.

One of the system requirements is that the application in charge of communications is not installed in the client machines, but instead that it is possible to download it from the web into any machine anywhere. Therefore, it is preferred to implement it as a client integrated web application. This also offers the advantage that it can be updated in the same way as server elements, since just by updating it a new version is downloaded in the following access of each one of the users. The biometric device is the key element in a desirable continuous updating policy. These updates are not only a system improvement but, due to the conditions surrounding the device, they are compulsory for the correct operation of the solution.

This device is to be used by the users in predictably unsafe environments and machines, with the risk of being infected by any type of virus, Trojan or derivatives. Also, it is exposed to attacks and to the misuse of malicious users, such as service denial, unauthorized signatures of documents, or owner credential theft attempts. The device is designed considering all these threats, and trying to prevent or minimize them to the fullest extent possible. However, due to the continuous appearance of new threats and the discovery of vulnerabilities in already existing systems, it is necessary to keep a software update system and remote control of the device.

These updates are managed from the server element, so that it is possible to activate a new update in one place, for this update to be later automatically deployed and installed in all devices recorded. When the client application detects the insertion of a valid device, first, it will check the state of the versions, to immediately deploy the new version if necessary. Therefore, as soon as it starts, the device waits for version verification, and a later update if necessary. The applet, in turn, checks the server and informs it of which device it is communicating with, so that the server is the one that decides which action to perform with said biometric device.

This central control of devices also allows other actions according to the device history, such as remote formatting or access log storage and localization. For example, a user device might be compromised, either due to theft or any other reason, and the user could inform the bank that s/he wants to disable it for said reason. At this point, the data of the device stored in the server could be set in "compromised" state, so that if a later access attempt took place it would be possible to store where said access attempt was being performed from, and from which environment, and later carry on with the complete invalidation of the device.

The updates are grouped in compressed files including an XML descriptor with the actions to be performed. Also, there exist greater or smaller updates, so that according to the type of update the device will act in one way or another, being immediately restarted or waiting for future updates before returning to the initial state.

Although at this step there will be no digital signature of the processes, it is important to indicate the processes to be followed at the moment of its implementation.

First: To start the process of signature of transactions or of any other document, the first step is that the web page where the Applet is embedded calls a method thereof, through a *JavaScript* type function, the parameter of which will be the complete string which is to be signed. It is important that the *Applet* is the same as the one used for the *login,* and which has been continuously loaded, that is, there must be a *frame* or some other container which is always open and where the *Applet* is preferably loaded. This call can be made as an answer to an event related to an html button, for example.

Second: Once the method execution has started, the Applet communicates with the device and requests that the string indicated is signed. At this point, the device asks the user to slide his/her fingerprint. If the verification is incorrect, an empty string is returned to the JavaScript function, which should interpret this result as an error in the signature process. If the fingerprint is correct, the device calculates the string hash to be signed through the SHA-1 algorithm, and encrypts said hash with the user private key, which is obtained from the cryptographic chip and never leaves the device, through the RSA algorithm. The certificate containing the user public key is also obtained from the cryptographic chip.

Third: Once the entire process has been carried out, the device returns the applet the result of the signature and user certificate containing its public key. Both data are returned by the applet to the JavaScript function requesting the signature. Then, this same JavaScript routine should be in charge of informing the server these data as well as all those necessary to complete the transaction or process which is being performed. When these data reach the server, it must verify that the certificate submitted is correct and signed by one of its trusted entities, that the transaction to be performed is possible and that the signature provided by the device is correct and corresponds to the certificate submitted.

**System initialization process:** it will take place from a locally running application, not downloaded online, and with access to the bank intranet, so that there will be access to the necessary resources to complete the process. It must not be an online application to prevent the sending of confidential data through the network, such as the machine code of the application, or the certificate to be installed in the device. This process is the following:
*First:* The device initializes, verifies that no fingerprint or client certificate is recorded, and waits to be initialized. To perform the verification it tries to communicate with the cryptographic card, which has not been initialized as it is the first time the device is initialized, or it will have been initialized but without the two necessary files. If the card has not been initialized, it will be initialized then. Also, it verifies if there exists a device certificate, necessary for the SSL communication with the client. If it does not exist (as it is the first time the device is initialized) a self-signed certificate is generated for a secure communication. Both processes, that of communication with the cryptographic card and that of the device certificate generation, are detailed below.
*Second:* A process is launched to listen in the assigned TCP port, and communication from the initializing program is awaited. This communication is established on the SSL, so that all information travelling from the client application to the device will travel encoded with asymmetric encryption. To that end, the device will use the self-signed certificate generated in its first initialization. Once communication is established from the application to the device, the latter immediately responds with the software version it has installed, so that the client application knows the specific features of the particular device.
*Third:* Next, the client application will have to send a concrete command, specified by two bytes, which indicates that it wants to know the device ID. If this command is not the expected one, the device will cut off communication immediately. If it is correct, it will answer with the device ID encrypted in 3DES (AES in the future) with an encryption key which is unique and different for each software update version of the device.
*Fourth:* The client application will communicate the device if it will operate with digital certificate or with text file, according to the requirements of each specific platform. This communication will have two bytes, which will be analyzed by the process of the device to act accordingly. Again, if the command is incorrect, the communication will be cancelled immediately.
*Fifth:* The following step is the sending of the client digital certificate and his/her associated private key (or if applicable, the text file with the summarized data) to the device. To that end, first the length of the file to be transmitted is sent as a text string ending in the new line character. Next, the content of the file is sent as binary data. The client certificate will be a couple of private and public keys signed by a trusted entity for the bank (either a Microsoft CA or an external trusted entity). Both data will be in a single file, with a pfx format, to favor the simplicity of communications with the device.
*Sixth:* The device then stores the pfx file in the cryptographic card. It answers the client application that the global result of the application has been correct with an OK byte, closes the connection and awaits further communications.
*Seventh:* The client application will then communicate to the database engine to inform that the device with the collected ID has been initialized. Also, the data related to the device certificate, which has been used for the SSL communication with it, will be stored therein. These data will not be the device certificate itself, but the certificate of the internal CA of the device which has been used to self-sign the device certificate. In this way, it is possible that the device itself changes its certificate and signs it again with its internal CA, without any identification problem thereof.
*Eighth:* Finally, the initializing PIN the user will have to use later for the activation of the device and the first fingerprint record is displayed to the user on the screen. This PIN will be based in the device ID, and it will be obtained by a basic transformation algorithm.

**Initializing process of the cryptographic card:** The cryptographic card is used to store the data of the certificate and the user private key and his/her fingerprint. To that end it uses a tree structure inside the file system of the card, so that there exists a root or *MasterFile* MF (as in other cards of this type), from which a DF *DedicatedFile* is branched for the present application. Inside this DF there exists an EF *ElementaryFile* for each file, two in total, with binary format and without any structure. One of the files represents a pfx where the certificate data and the private key are stored, and the other stores the HASH string summarizing the user fingerprint.

As protection for these data, it is necessary to insert a PIN to access the DF, which will enable us to read and change both files. This pin must be generated by a standard algorithm using the device ID and a symmetric key only known by the software of the devices. In this way the card PIN will be different for each cryptographic card, and the possibility of access to a cryptographic card from a device which is not the same as the one initializing it is also avoided.

The symmetric key used to generate the PIN is stored inside the device control program, so it is stored in machine code inside the executable, and later in the volatile RAM memory the operating system uses for its processes. Therefore, it never leaves the device and it is not exposed to theft in the network. Therefore, the initializing process would consist on the creation of the MF, DF and its associated PIN.

**Update and remote formatting process:** Once the device has been recorded in the system, initialized and activated, it is possible to remotely update the software installed in it or any of its parameters.

This is possible thanks to a version control system which is carried out in the server, and in which both a version history and the version identifier installed on each device are stored. The update process is the following:
*First:* The device initializes, verifies that it has a fingerprint and client certificate recorded. To perform the verification it tries to communicate with the cryptographic card, which must have initialized, and with the two necessary files. Also, it verifies that there exists a device certificate, necessary for the SSL communication with the client.
*Second:* A process is launched to listen in the assigned TCP port, and communication from the client program is awaited. This communication is established on the SSL, so that all information travelling from the client application to the device will travel encoded with asymmetric encryption. To that end, the device will use the self-signed certificate generated in its first initialization. Once communication is established from the application to the device, the latter immediately responds with the software version it has installed, so that the client application knows the specific features of the particular device.
*Third:* Next, the client application will have to send a determined command, specified by two bytes, which indicates that it wants to know the device ID. This command depends on the software version installed in the device, so it can be different among versions. Therefore, it is necessary to maintain a version history, either in the server, or in the client application, since if the information on how to communicate with a software version is not available, it will be impossible to use the devices with said software version installed. The decision to eliminate older versions from the history will fall on the policies established by each client. If the version history and its specific characteristics (type of commands, communication means, etc.) are stored in the server, the client application will have to request from it the necessary information to be able to interact with the device. If this command is not the expected one, the device will cut off communication immediately. If it is correct, it will answer with the device ID encrypted in 3DES (AES in the future) with an encryption key which is unique and different for each software update version of the device.
*Fourth:* Once the client application has gathered both data, it will resend them to the server together with the SSL server certificate used by the device. The latter will decipher the device identifier with the appropriate 3DES key for the software version installed in the device, and it will verify in its database that according to the information available to it, the data provided by the device are correct. This verification will have two steps: first, it will have to validate that the SSL certificate of the device is signed by the device CA that is stored in the server database, accepting in this way that it is a valid device. The second step is to verify that the version that the device has said it has is in fact the version the server has recorded for said device. If the information does not coincide, it will be determined that there is an attempt to deceive the system and the device will be marked as invalid. Once this verification has been performed correctly, the system will look for an available software version subsequent to the one installed. If it does not exist, it means that the device has installed the latest software version and from this point the normal login process takes place. If a new version exists, its installation takes place.
*Fifth:* Once it has been detected that a new version has to be installed, it is sent as a file from the server to the client application. This file will be compressed in a tar.gz format, and it will include all the new files to be copied or replaced in the device, and an xml file which will specify the actions the device must perform to complete the update. Basically, these actions will only refer to the files contained in the tar.gz and to the local system files of the device.
*Sixth:* Next, the client application will communicate the device that it must be updated, and that it must prepare to receive the new update. This will be performed with a 2 byte code; as always, this code will depend on the software version. Next, the device will be awaiting the receipt of, first, the update file length, and second, the content of the file. Once the update file has been received, the device will decompress it in a temporary directory and analyze the xml content. As we have already mentioned, this xml will consist of a list of actions on device files and the files contained in said temporary directory. An example of a file would be: 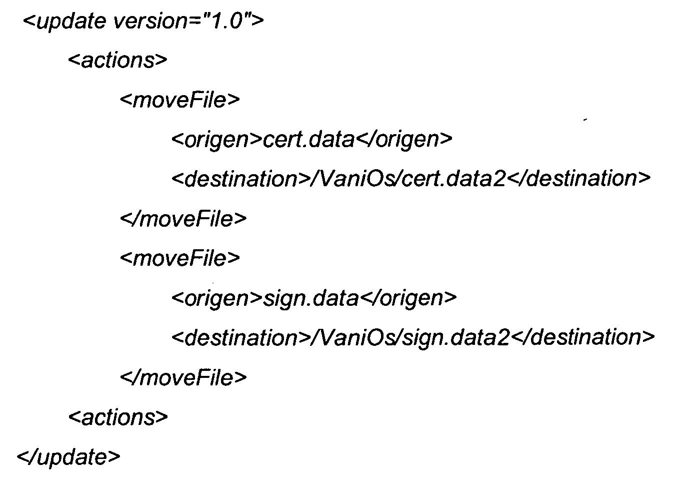 Where the actions to be performed would be to replace local files indicated with their complete routes by the versions included in the update file.
*Seventh:* Finally, once all actions to be performed have been completed, the device will inform the client application that the update has been completed correctly and it will proceed to close the connection, finish the execution processes and restart not only the necessary routes for its operation but the entire operating system. The plugin will then inform the server about this, which will have to record in its database that the device indicated will work from now on with the new version. It is possible that this information fails to reach the server, but the device would still have been updated. In this case, the server will know that it has sent the version for the device update and received no answer. In this case, the next time login is attempted from this device, the server will verify that the device has installed one of the two software versions, since it is not known a priori if the update was executed or not, act accordingly and record the possible changes in its database. As regards the versions and updates it is worth pointing out that they will be labelled with a name according to the bank, and three numbers separated by commas; for example: CAN.3.5.7

According to this nomenclature, both the first and the last number indicate changes which will overwrite the previous ones, so that consecutive versions with changes in said numbers will completely overwrite the previous one. Thus, the 3.5.7 version will completely overwrite the changes made to the 3.5.4 version. This implies that in order to go from the 4.2.5 version to the 8.0.0 version it will not be necessary to install any intermediate version, simply this latter one. Thus, the version changes which modify the first number of version will always have to include all the changes made in older versions, and therefore, they will have to contain the complete application in its current state.

However, the intermediate number is updated in an incremental manner so that it is necessary to go through all previous updates to reach the current one.

For example, the process to go from the 1.2.3 version to the 4.2.5 version would be the following:
- Installing the 4.0.0 version
- Installing the 4.1.0 and 4.2.0 updates
- Installing the 4.2.5 modification

The terminology we have just used corresponds to the form of applying these changes, so that the first number represents complete "versions" of the software. The second one, however, are only "updates" of said versions, as they do not include all the software, but specific changes on it. Finally, the last number represents configuration changes, such as encryption keys, in which the last change always overwrites the previous ones.

The updates and modifications will travel and be installed in the form of compressed files containing an xml with the installation instructions; and all files which need to be changed or updated. If there is an error during these updates, the device will always have the complete last version installed somewhere in its file system, so that it is possible to reinstall it.

The versions, as we have said, are complete software packets. They are also compressed files, with complete routes for all files which are to be decompressed. It could be said that they are self-install packets, since they only have to be managed with the default application for all the necessary files to be copied to the operating system. Thus, it will always be possible to install these packets even if the process is corrupted due to an update, as standard programs will be in charge of installing them. Also, optionally, they could include an xml file with instructions after the initialization, so that as a step after the first start of the newly installed new version, it will be verified if said xml exists and the instructions contained therein will be executed.

These versions will also be the software which will be installed in the devices at their initialization by the bank; the versions will be the same both in the first installation and in subsequent installations.

Finally, it must be highlighted that all sending of versions and updates will be encrypted with a symmetric encryption static algorithm, whose key will be obtained from a device identifier. This encryption will not be able to be changed between versions.

Device certificate creation and update: Before the first initialization of the device, in fact with every start-up, the existence of a device certificate with its associated private key will be verified. These data will be stored in the local file system of the device, accessible for the operating system installed. If it does not exist, it will be created, following the process below.
*First:* Creation of a public key and a private key through open SSL, which will serve as certification entity. Later, when the device initializing process is completed, this public key will be stored in the server database, to be able to recognize which device certificates are valid for each one of them.
*Second:* Creation of a private key for the device. Once we have this private key, a certificate request will be generated with the associated public key, and the certificate will be signed with the private key of the CA generated in the previous step. These actions are all based in openssl, so that it will be necessary that the device executes a specific command for each one of them.
*Third:* For the communication with the client applications a device private-public key couple will be used, and the client application will be in charge of validating that the certificate used is signed by the device CA, whose public key is stored in the server from the initialization.

Activation process: When the device initializes, and if while performing its verifications, it discovers that it has a client certificate installed and another device certificate, but that there is no fingerprint recorded, it will execute the following process.
*First:* A process is launched to listen in the assigned TCP port, and communication from the activation program is awaited. This communication is established on the SSL, so that all information travelling from the client application to the device will travel encoded with asymmetric encryption. To that end, the device will use the self-signed certificate generated in its first initialization. This process may already have been started, since as we saw in the previous section, when the initialization finishes, the device is not turned off, but awaits new TCP communications (which as it is initialized, will serve for the activation). Once communication is established from the application to the device, the latter immediately responds with the software version it has installed, so that the client application knows the specific features of the particular device.
*Second:* Next, the client application will have to send a concrete command, specified by two bytes, which indicates that it wants to know the device ID. This command is the same as that in the initialization process, and only changes from one software version to the next version. If this command is not the expected one, the device will cut off communications immediately. If it is correct, it will answer with the device ID encrypted in 3DES (AES in the future) with an encryption key which is unique and different for each software update version of the device.
*Third:* At this point in the activation application, the user will have to insert the activation PIN, which will be sent first to the server for verification and later to the device as a text string ending in the new line character. The server verifies that the PIN is correct and informs the client application that it is correct. Once verified, it is sent to the device. The device also verifies that the PIN is correct, as it knows the transformation necessary for obtaining it from its own ID. When the client application receives the answer from the server, and before sending the PIN to the device, the current date data and IP are sent from where the connection to the server takes place, data which the device itself cannot know. To that end, it sends a specific 2 byte command which will configure the date, and then it sends a text string which represents the current date. The date is obtained from the client machine and it has the month-day-hour-minute-year format (MMddkkmmyyyy). Once the device receives this string, it establishes the date and hour of its operating system as indicated. Next, the client application sends another 2 byte command indicating that it will indicate the device the external IP from where it is connecting, so that it is shown in the logs stored by the device. After sending the 2 bytes, it sends a text string which shows the IP, in the xxx.xxx.xxx.xxx format.
*Forth:* If the PIN is incorrect, the device informs the activation application and communication is cut off. Otherwise, the device informs that the PIN is correct, and waits for the user to slide his/her finger on the fingerprint reader. In case the PIN sent to the server is incorrect, it will record a failed activation attempt, increasing a counter with every failed attempt. When a specific number of attempts is reached, the device will be blocked and it will not be possible to operate with it.
*Fifth:* The result of this first fingerprint reading is immediately stored as a HASH string in the cryptographic chip and again the client application is informed of the correct result of the process.
*Sixth:* Finally, as in the case of the initialization process, communication is cut off and the device is activated and awaits new communications to perform the normal operation process.

**Digital Fingerprints:** The result of sliding the finger on the fingerprint reader is a reconstructed bit map image. This image is treated with proprietary algorithms of the fingerprint reader manufacturer to extract its critical points, its minor details. These minor details, which summarize and store all the necessary information to identify a fingerprint, are managed again with a proprietary function and grouped and compacted as a HASH string, which in case of the fingerprint record will be what is stored in the cryptographic chip.

In case of wanting to perform identity verification, the HASH stored in the device is compared with the HASH obtained in the sliding of the finger. This verification is not one of equality, rather each time the finger is slid the result can be different, and therefore, it is necessary to use a proprietary recognition algorithm which will have to take into account the way of obtaining the minor details of each image and the form of compacting them in a HASH string.

**Regular work process:** When the device detects that it has been initialized and activated, that is, that it has the user certificate, device certificate and recorded fingerprint, it enters the regular work process.
*First:* The device initializes and verifies its state. As in the preceding processes, it acts accordingly and initializes the listening process in the TCP port. When the communication is established, it sends its software version.
*Second:* Next, the client application will have to send a specific command, specified by two bytes, which indicates that it wants to know the device ID. This command is the same as the one in the initialization and activation process, and only changes from one software version to the next version. If this command is not the expected one, the device will cut off communications immediately. If it is correct, it will answer with the device ID encrypted in 3DES (AES in the future) with an encryption key which is unique and different for each software update version of the device.
*Third:* The client application will send the obtained device ID encrypted and its software version to the server. The client application will at no time encode or decode any data coming from, or targeted to, the device. The server verifies then that the device with the indicated ID is activated and that the software version installed is the correct one. In case the device needs to be updated, this will be communicated to the client application and the latter will start the update or formatting thereof. In case the state is the correct one, the client application assumes it can continue .with the login process. To that end, first, it will send the device the current date data and IP from where the connection to the server takes place, data which the device itself cannot know. To that end, it sends a specific 2 byte command which will configure the date, and then it sends a text string which represents the current date. The date is obtained from the client machine and it has the month-day-hour-minute-year format (MMddkkmmyyyy). Once the device receives this string, it establishes the date and hour of its operating system as indicated. Next, the client application sends another 2 byte command indicating that it will indicate the device the external IP from where it is connecting so that it is shown in the logs stored by the device. After sending the 2 bytes, it sends a text string which shows the IP, in the xxx.xxx.xxx.xxx format. In case both transmissions are performed correctly, a new 2 byte command is sent to the device indicating that it can start the fingerprint verification.
*Fourth:* The device process waits for the user to slide his/her finger on the fingerprint reader. Once the bit map image of the user fingerprint is obtained, it is treated and transformed as it was indicated before, the recorded fingerprint stored in the cryptographic chip is obtained and they are compared. If the verification is negative, the application is informed thereof, communications are cut off and the device is again in the standby mode.
*Fifth:* If the verification is positive the application is also informed thereof. Besides, a OneTimePassword is generated in the device. This OneTimePassword is based on the device ID and on a session counter, which are combined to generate a string from which both parameters can be extracted by an algorithm to be defined. Later, it is encrypted with the same encryption used for the device ID in previous communications, and it is sent to the application, which without decoding it at any time, will send it to the server. At this point the device considers that the session has started correctly and awaits the following operations, such as transaction signature and others.
*Sixth:* The server receives the OTP generated, decodes it and verifies it. To that end, it verifies that the ID obtained from this password corresponds to the ID of the device trying to login, and that the associated session counter is subsequent to the last one used to login. It is not necessary that the session counter be immediately subsequent, but it must be greater, due to the countless problems that could arise from using such a strict requirement. When the server has positively verified this OTP, it will display to the user his/her client environment, since it considers the login in the environment has been performed correctly.

**Processes after the login:** Once login in the device has occurred, the session will remain open until either the TCP communication is closed, or until a command is received to logout. Meanwhile it is listening waiting to receive other operation commands. Each command comprises 2 bytes, and they are the following. It is necessary to indicate that each command does not exclude the others, that is, that once the login has occurred it is possible, for example, to make 2 process signatures, and later modify the fingerprint without having to login again, as long as the TCP channel with the client application is not cut off.
- Signature of a set of bytes. When it is desired to make a signature of a process or document from the web page, the client application is requested to do so. It will send the corresponding command to the device through the TCP communication established with it. Next, it must send the length of the content to be signed, and later the content itself. The device will then access the cryptographic chip thanks to the PIN and it will obtain the pfx file containing both the user private key and the user certificate. It will use the private key to sign the content through the SHA1 hash and RSA encryption algorithms, and it will return this signature and the user certificate to the client application. The client application will send both data to the web page, which will be in charge of sending them to the server for their verification, treatment and storing.
   - Software update.
   - Fingerprint modification. The client application sends the command to start this process to the device; which waits for the user to slide his/her finger on the fingerprint reader, and stores the result on the cryptographic chip. The previously recorded fingerprint is not requested to the user since s/he has already login in the device and therefore his/her identity has been verified.
   - User certificate modification. As in the previous case, the client application is in charge of sending to the device both the necessary command (2 bytes) and the length and content of the new certificate. Once the latter is received, it will be stored in the cryptographic chip replacing the previous certificate completely (and its private key).

### Additional use possibilities for the secure environment access system.

Using the same solution and the same processes, this system of access to telematic environments based on fingerprints and cryptographic systems also has other clearly defined uses such as:
- Payment means system: Associated to a payment gateway, this solution can serve to make payments or collections through the Internet, the system would require the processes described above to identify the user in the banking environment and these operations would be carried out through the systems already implemented by banks.
- Access to corporate environments: Using the processes described above, the solution can also serve to allow access to corporate telematic environments through this biometric device, as long as it implements the contents of the solution described.
- Likewise, these same processes can be implemented for user identification in telematic environments in a trusted and secure manner, regardless of the use or applications to be accessed, as long as, the components and processes described in this document are implemented.

Another differentiating element is the multi-user and multi-entity capability, that is, several users in the same device and only one device for several banks. In the first case, multi-user, the user will identify him/herself unequivocally before the server after the sliding of his/her fingerprint due to a unique user identifier like the one recorded in the server. On the other hand, the multi-entity capability is attained by means of sending, by the applet, an entity code which serves as pointer so that the device knows which data to send.

## Claims

1. Secure access control system in banking or similar operations comprising, at least a server (1) or *host* element configured to contain all the functionality of the solution in communication with a banking environment (5), a biometric device (2), a client element (3) and the communication elements (4) between the server element (1) and the client element (3), **characterized in that** said elements are configured in such a way that:
an "*applet*" component built into the server element (1) initiates the control process (41) requesting the authentication (42) of the biometric device (2), performing the authentication by means of a certificate of the biometric device; once the biometric device (2) has been validated, it requests the biometric data (43) from the user, said data being verified by comparison with the biometric data recorded in the prior process, and if the result is positive, a password (OTP) is generated which is sent to the server element (1) for validation, the banking environment (5) being informed and responding with the user customized environment (49) if the authentication is positive, said environment being displayed in the client element (3), the client environment being in a second plane with respect to the banking environment (5) which is the one that maintains the control over the state of the session.

2. System according to claim 1, **characterized in that** it comprises a database including all the information associated to each biometric device (2), said information comprising, at least, a common field which identifies the user in a unique manner in the server (1) and banking environments (5).

3. System according to claim 2, **characterized in that** said information is in the form of tables, at least one of users (21), one of devices (22) and one of application versions (23).

4. System according to claim 1, **characterized in that** it is configured to sign processes digitally, and where a *plugin* element built into the user environment (3) starts the signature process (51) against the bank traditional server (5), the latter makes a signature request (52) to the user through the applet element and the biometric device (2), where said data are verified as well as the document signature (53); and where once the document is deemed signed (54), the signature (55) is sent to the sever element (1), where it is stored, and an answer, redirection and result (56) are given to the traditional bank server (5).

5. System according to claim 1, **characterized in that** the biometric device (2) comprises, at least:
a digital fingerprint reader and a cryptographic element configured to understand the security elements fundamental to the access to banking environments, such as the user personal data included in the fingerprint and their digital certificate; and
a processor and memory configured to execute an operating system, where this operating system is in charge of communicating and managing different components of the device, as well as the access and modification of personal data stored in the memory, and the communication with the client element (3).

6. System according to claim 5, **characterized in that** the biometric device (2) is a USB type external component which communicates with the client element (3) using the USB over IP protocol, so that the packets exchange is carried out by means of TCP defining a closed message and data format.

7. System according to claim 1, **characterized in that** the communications (4) between the client element (3) and the server element (1) are carried out by means of the HTTPS protocol, end-to-end encrypted, the server element (1) and the biometric element (2) connected to the client element (3) being the ones in charge of cryptographic functions.
